(19) Europäisches Patentamt / European Patent Office / Office européen des brevets

(11) **EP 3 288 993 B1**

(12) **EUROPÄISCHE PATENTSCHRIFT**

(45) Veröffentlichungstag und Bekanntmachung des Hinweises auf die Patenterteilung:
**14.08.2019** Patentblatt **2019/33**

(51) Int Cl.:
**C08G 18/48** *(2006.01)*    **C08G 18/66** *(2006.01)*
**C08G 64/34** *(2006.01)*    **C08G 18/32** *(2006.01)*
**C08G 18/40** *(2006.01)*    **C08G 18/44** *(2006.01)*

(21) Anmeldenummer: **16718673.3**

(22) Anmeldetag: **26.04.2016**

(86) Internationale Anmeldenummer:
**PCT/EP2016/059275**

(87) Internationale Veröffentlichungsnummer:
**WO 2016/174027 (03.11.2016 Gazette 2016/44)**

(54) **POLYURETHANUMMANTELUNGEN MIT VERMINDERTER WASSERAUFNAHME UND DEREN VERWENDUNG**

POLYURETHANE OUTER SHELLS HAVING REDUCED WATER ABSORPTION AND THEIR USE

ENVELOPPE EN POLYURÉTHANE PRÉSENTANT UNE RÉCEPTION D'EAU RÉDUITE ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2015 EP 15165377**
**16.12.2015 EP 15200574**

(43) Veröffentlichungstag der Anmeldung:
**07.03.2018** Patentblatt **2018/10**

(73) Patentinhaber: **Covestro Deutschland AG**
**51373 Leverkusen (DE)**

(72) Erfinder:
• **MEYER ZU BERSTENHORST, Birgit**
**51375 Leverkusen (DE)**
• **PFEUFFER, Uwe**
**51377 Leverkusen (DE)**
• **NIEDERELZ, Heike**
**51373 Leverkusen (DE)**
• **NEFZGER, Hartmut**
**50259 Pulheim (DE)**

(74) Vertreter: **Levpat**
**c/o Covestro AG**
**Gebäude 4825**
**51365 Leverkusen (DE)**

(56) Entgegenhaltungen:
**EP-A1- 0 781 792**

• **Scott Allen ET AL: "Novel CO 2 -based Polycarbonate Polyols for Cast Urethanes", , 7. Mai 2013 (2013-05-07), XP055222597, Gefunden im Internet:
URL:http://www.pmahome.org/files/1713/6613 /8001/Novomer_Paper_for_PMA_2013_vF.pdf [gefunden am 2015-10-21]**
• **Anna Cherian: "Carbon Dioxide-Based Polycarbonate Polyols for Polyurethane Systems | 2014-11-01 | Adhesives Magazine", , 1. November 2014 (2014-11-01), XP055222595, Gefunden im Internet:
URL:http://www.adhesivesmag.com/articles/9 3368-carbon-dioxide-based-polycarbonate-po lyols-for-polyurethane-systems [gefunden am 2015-10-21]**

**Beschreibung**

Die Erfindung betrifft Polyurethanummantelungen mit verminderter Wasseraufnahme und deren Verwendung.

Scott Allen et al offenbaren im Aufsatz "Novel CO2-based Polycarbonate Polyols for cast Urethanes", 7. Mai 2013 (gefunden im Internet) Mischungen aus Polycarbonatpolyolen und Polyesterpolyolen. Diese Mischungen werden zur Herstellung von Polyurethanen mit guter hydrolytischer Stabilität eingesetzt.

Polyurethane neigen generell dazu, Wasser aufzunehmen und gegebenenfalls aufzuquellen, was in vielen Anwendungsfällen von großem Nachteil ist.

Demzufolge lag die Aufgabe der vorliegenden Erfindung darin, Ummantelungen auf Basis von Polyurethan(PUR)systemen zur Verfügung zu stellen, die eine möglichst geringe Wasseraufnahme zeigen.

Diese Aufgabe konnte durch den Einsatz von Alkylenoxid-$CO_2$-Polyethercarbonatpolyolen (PEC) als Reaktivkomponente im Polyurethansystem gelöst werden. Der Einbau derartiger PEC führte überraschenderweise dazu, dass die Wasseraufnahme so modifizierter Polyurethansysteme im Vergleich zu analogen, jedoch auf Polyetherpolyolen auf Basis Ethylenoxid und/oder Propylenoxid, auf Polyesterpolyolen (PES) oder auf Polycarbonatpolyolen basierenden Polyurethansystemen aus dem Stand der Technik deutlich verringert wird.

Im Vergleich zu den konventionellen Polyurethanreaktivsystemen zeichnen sich die erfindungsgemäß verwendeten Systeme weiterhin dadurch aus, dass sie in Folge des Einsatzes von PEC ressourcenschonender und somit nachhaltiger sind als konventionelle Systeme, da ein Teil der Polymerketten nicht aus fossilen Rohstoffen, sondern aus dem in die Polymerketten eingebauten Treibhausgas Kohlendioxid bestehen.

Als Einsatzgebiete der erfindungsgemäßen Polyurethanummantelungen seien das Bauwesen sowie die Automobilindustrie genannt.

Ummantelung bedeutet in dieser Anmeldung die teilweise oder komplette Abdeckung eines Bauteils mit dem erfindungsgemäß eingesetzten Polyurethanreaktivsystem, wobei das Bauteil aus jedem beliebigen Werkstoff bestehen kann. Der Zweck der Ummantelung ist vielfältig und kann beispielsweise durch Anforderungen wie Kantenschutz, Abdichtung, Feuchtigkeitsbarriere, Kapselung von sensiblen Komponenten (z.B. Sensoren), Dekor und Kaschierung veranlasst sein. Ummantelungen können auch als Verbindungselement mehrerer Bauteile dienen. Beispielhaft seien genannt: Ummantelung von Scheiben und Platten jeglicher Art, wie z.B. von Glasscheiben, von Fliesen, von Laminaten, beispielsweise von Sperrholzbrettern , von Spanholzplatten, von Tischlerplatten und von Metallplatten. Weiterhin ist die Ummantelung von Kabeln, von Solarmodulen und von Sensoren möglich. Ummantelungen können auch als Dichtungsmaterial, z.B. als Dichtungsringe, verwendet werden.

Gegenstand der Erfindung sind Ummantelungen aus einem Polyurethan, wobei das Polyurethan erhältlich ist aus:

A) einer Polyolkomponente bestehend aus

A1) 5 bis 90 Gew.-%, bevorzugt 10 bis 80 Gew.-%, besonders bevorzugt 13 bis 75 Gew.-% mindestens eines Polyethercarbonatpolyols (PEC) mit einem Anteil an eingebautem $CO_2$ von 14 bis 25 Gew.-%, bezogen auf die Gesamtmasse der PEC, und mit einem zahlenmittleren Molekulargewicht (M) von 600 bis 6000 Da (gemessen gemäß DIN 53240; Dezember 1971 und berechnet nach der Formel: M= 56100 • Funktionalität/OH-Zahl) und einer zahlenmittleren Funktionalität von 2 bis 3 und

A2) 10 bis 95 Gew.-%, bevorzugt 20 bis 90 Gew.-% mindestens eines weiteren Polyols mit einem zahlenmittleren Molekulargewicht von 200 bis 6500 Da (gemessen gemäß DIN 53240; Dezember 1971 und berechnet nach der Formel: M= 56100 • Funktionalität/OH-Zahl) aus der Gruppe bestehend aus Polyetherpolyolen mit einer zahlenmittleren Funktionalität von 2 bis 8, Polyesterpolyolen mit einer zahlenmittleren Funktionalität von 2 bis 3 und Polycarbonatpolyolen mit einer zahlenmittleren Funktionalität von 2 bis 3 und

A3) 2 bis 20 Gew.-% aliphatischen Alkandiolen mit jeweils zahlenmittleren Molekulargewichten von 62 bis 500 Da (gemessen gemäß DIN 53240; Dezember 1971 und berechnet nach der Formel: M= 56100 • Funktionalität/OH-Zahl) und

A4) 0 bis 10 Gew.-% kurzkettigen aliphatischen Polyaminen und/oder aliphatischen Aminoalkoholen mit zahlenmittleren Molekulargewichten von 60 bis 1200 Da (gemessen gemäß DIN 53240; Dezember 1971 und berechnet nach der Formel: M= 56100 • Funktionalität/OH-Zahl bzw. NH-Zahl) und einer Funktionalität von 2,

A5) Katalysatoren und

A6) gegebenenfalls Hilfs- und/oder Zusatzmitteln

wobei die Summe aus A1), A2), A3), A4), A5) und A6) 100 Gew.-% beträgt, und

B) einer Isocyanatkomponente bestehend aus

B1) mindestens einem Isocyanat aus der Gruppe bestehend aus Polyisocyanaten der Diphenylmethanreihe, Polyisocyanatgemischen der Diphenylmethanreihe und deren Umsetzungsprodukten mit mindestens einer Polyolkomponente mit einem zahlenmittleren Molekulargewicht von 140 bis 500 Da (gemessen gemäß DIN 53240; Dezember 1971 und berechnet nach der Formel: M= 56100 • Funktionalität/OH-Zahl) und einer zahlenmittleren Funktionalität von 2 bis 3, die NCO-Gehalte von 10 bis 28 Gew.-% NCO (sogenannte NCO-Prepolymere) aufweisen, oder

B2) mindestens einem Isocyanat aus der Gruppe bestehend aus aliphatischen Polyisocyanaten und deren Umsetzungsprodukten mit mindestens einer Polyolkomponente mit einem zahlenmittleren Molekulargewicht von 140 bis 500 Da (gemessen gemäß DIN 53240; Dezember 1971 und berechnet nach der Formel: M= 56100 • Funktionalität/OH-Zahl) und einer zahlenmittleren Funktionalität von 2 bis 3, die NCO-Gehalte von 10 bis 28 Gew.-% NCO (sogenannte NCO-Prepolymere) aufweisen,
wobei die Kennzahl 90 bis 115, bevorzugt 95 bis 110, besonders bevorzugt 97 bis 108 beträgt.

Besonders bevorzugte erfindungsgemäße Ummantelungen aus Polyurethan sind solche, wobei das Polyurethan erhältlich ist aus:

A) einer Polyolkomponente bestehend aus

A1) 13 bis 75 Gew.-% mindestens eines Polyethercarbonatpolyols (PEC) mit einem zahlenmittleren Molekulargewicht von 800 bis 4500 Da (gemessen gemäß DIN 53240; Dezember 1971 und berechnet nach der Formel: M= 56100 • Funktionalität/OH-Zahl) und einer zahlenmittleren Funktionalität von 2 bis 3 und einem Anteil an eingebautem $CO_2$ im Bereich von 14 bis 25 Gew.-%, bezogen auf die Gesamtmasse der PEC, und basierend auf Alkylenoxiden aus der Gruppe bestehend aus 70 bis 100 Gew.-% Propylenoxid und 0 bis 30 Gew.-% Ethylenoxid, und
A2) 23 bis 85 Gew.-% mindestens eines weiteren Polyols mit einem zahlenmittleren Molekulargewicht von 200 bis 6500 Da (gemessen gemäß DIN 53240; Dezember 1971 und berechnet nach der Formel: M= 56100 • Funktionalität/OH-Zahl) aus der Gruppe bestehend aus 70 bis 100 Gew.-% Polyetherpolyolen mit einer zahlenmittleren Funktionalität von 2 bis 8, 0 bis 30 Gew.-% Polyesterpolyolen mit einer zahlenmittleren Funktionalität von 2 bis 3 und 0 bis 30 Gew.-% Polycarbonatpolyolen mit einer zahlenmittleren Funktionalität von 2 und
A3) 2 bis 20 Gew.-% aliphatischen Alkandiolen mit zahlenmittleren Molekulargewichten von 62 bis 500 Da (gemessen gemäß DIN 53240; Dezember 1971 und berechnet nach der Formel: M= 56100 • Funktionalität/OH-Zahl) und
A4) 0 bis 10 Gew.-% kurzkettigen aliphatischen Polyaminen und/oder aliphatischen Aminoalkoholen mit zahlenmittleren Molekulargewichten von 60 bis 1200 Da (gemessen gemäß DIN 53240; Dezember 1971 und berechnet nach der Formel: M= 56100 • Funktionalität/OH-Zahl bzw. NH-Zahl) und einer Funktionalität von 2,
A5) Katalysatoren und
A6) gegebenenfalls Hilfs- und/oder Zusatzmitteln

wobei die Summe aus A1), A2), A3), A4), A5) und A6) 100 Gew.-% beträgt, und

B) einer Isocyanatkomponente bestehend aus

B1) mindestens einem Isocyanat aus der Gruppe bestehend aus Polyisocyanaten der Diphenylmethanreihe, Polyisocyanatgemischen der Diphenylmethanreihe und deren Umsetzungsprodukten mit mindestens einer Polyolkomponente mit einem zahlenmittleren Molekulargewicht von 140 bis 500 Da (gemessen gemäß DIN 53240; Dezember 1971 und berechnet nach der Formel: M= 56100 • Funktionalität/OH-Zahl) und einer zahlenmittleren Funktionalität von 2 bis 3, die NCO-Gehalte von 10 bis 28 Gew.-% NCO aufweisen, oder

B2) mindestens einem Isocyanat aus der Gruppe bestehend aus aliphatischen Polyisocyanaten und deren Umsetzungsprodukten mit mindestens einer Polyolkomponente mit einem zahlenmittleren Molekulargewicht von 140 bis 500 Da (gemessen gemäß DIN 53240; Dezember 1971 und berechnet nach der Formel: M= 56100 • Funktionalität/OH-Zahl) und einer zahlenmittleren Funktionalität von 2 bis 3, die NCO-Gehalte von 10 bis 28 Gew.-% NCO aufweisen,

wobei die Kennzahl 90 bis 115 beträgt.

Bei den Molekulargewichtsangaben handelt es sich um zahlenmittlere Angaben, die gemäß DIN 53240; Dezember 1971 gemessen und nach der Formel: M = 56100 • Funktionalität/OH- bzw. NH-Zahl (Hydroxyl- bzw. Aminzahl) berechnet wurden.

Als Komponente A1) geeignete Polyethercarbonatpolyole (PEC), wie sie beispielsweise in WO 2008/092767 A1 oder in EP 2 703 426 A1 beschrieben werden, sind Umsetzungsprodukte von Alkylenoxiden mit $CO_2$ und niedermolekularen Starterpolyolen unter Einsatz von sogenannten Doppelmetallcyankatalysatoren, wobei die Alkylenoxide 2 bis 8 C-Atome aufweisen und aus der Gruppe bestehend aus Ethylenoxid, Propylenoxid, Butylenoxid, Cyclohexanoxid und Styroloxid entstammen. Bevorzugt sind Propylenoxid und Gemische aus Ethylenoxid und Propylenoxid, wobei Propylenoxid im Überschuss vorliegt. Die Starterpolyole weisen Hydroxylendgruppen auf und besitzen Molmassen von 100 bis 1000 Da (gemessen gemäß DIN 53240; Dezember 1971 und berechnet nach der Formel: M= 56100 • Funktionalität/OH-Zahl (Hydroxylzahl)) und Hydroxylfunktionalitäten von 2 bis 3. Der Anteil an eingebautem $CO_2$ liegt im Bereich von 14 bis 25 Gew.-%, bezogen auf die Gesamtmasse der

PEC. Die PEC weisen zahlenmittlere Molmassen von 600 bis 6000 Da, bevorzugt von 800 bis 4500 Da auf.

Geeignete Polyetherpolyole in der Komponente A2) sind Verbindungen mit mindestens zwei gegenüber Isocyanat reaktiven Hydroxylgruppen. Das zahlenmittlere Molekulargewicht der verwendeten Polyetherpolyole beträgt 200 bis 6500 Da. Bevorzugt erhält man die OH-Gruppen aufweisenden Polyetherpolyole nach bekannten Verfahren, beispielsweise durch anionische Polymerisation von Epoxiden, katalysiert durch Alkalihydroxide, wie Natrium- oder Kaliumhydroxid, oder Alkalialkoholate, wie Natriummethylat, Natrium- oder Kaliumethylat oder Kaliumisopropylat, unter Zusatz mindestens eines Startermoleküls das 2 bis 8, vorzugsweise 2 bis 6, reaktive Wasserstoffatome gebunden enthält, oder durch kationische Polymerisation von Epoxiden, katalysiert durch Lewis-Säuren, wie Antimonpentachlorid, Borfluorid-Etherat u.a. oder Bleicherde unter Zusatz mindestens eines Startermoleküls, das 2 bis 8, vorzugsweise 2 bis 6 reaktive Wasserstoffatome gebunden enthält. Weiterhin kann die Herstellung der Polyetherpolyole mittels Doppelmetallcyanidkatalyse erfolgen, wobei hier auch eine vollkontinuierliche Fahrweise möglich ist.

Zur Herstellung derartiger Polyetherpolyole geeignete Alkylenoxide sind beispielsweise Tetrahydrofuran, Oxetan, 1,2- bzw. 2,3-Butylenoxid, Ethylenoxid, 1,2-Propylenoxid und Styroloxid. Besonders geeignete Alkylenoxide sind solche mit 2 bis 4 Kohlenstoffatomen im Alkylenrest, insbesondere Ethylenoxid, 1,2-Propylenoxid oder 1,2-Butylenoxid. Die Alkylenoxide können einzeln, blockweise nacheinander, blockweise alternierend oder als Mischungen dosiert werden. Als Startermoleküle in Betracht kommen beispielsweise aliphatische Polyole, wie z.B. 1,3-Propylenglykol, 1,2-Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Wasser, Glycerin, Trimethylolpropan, Triethanolamin, Pentaerythrit, Sorbit, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol, sowie Mannichbasen. Außerdem können als Starterverbindungen auch Ringöffnungsprodukte aus cyclischen Carbonsäureanhydriden und Polyolen eingesetzt werden. Beispiele hierfür sind Ringöffnungsprodukte aus Phthalsäureanhydrid, Bernsteinsäureanhydrid, Maleinsäureanhydid einerseits und Ethylenglykol, Diethylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit oder Sorbit andererseits. Solche Ringöffnungsprodukte können auch in situ direkt vor dem Start der Alkylenoxidadditionsreaktion im Polymerisationsreaktor hergestellt werden. Daneben ist es auch möglich, ein- oder mehrfunktionelle Carbonsäuren direkt als Starterverbindungen einzusetzen. Es können natürlich auch Gemische verschiedener Starterverbindungen eingesetzt werden.

Geeignete Polyesterpolyole in der Komponente A2) sind Umsetzungsprodukte von mindestens bifunktionellen organischen Carbonsäuren und/oder Carbonsäureäquivalenten mit niedermolekularen Polyalkoholen, wobei die Polyesterpolyole zahlenmittlere Molekulargewichte von 200 bis 6500 Da, bevorzugt 500 bis 5000 Da, besonders bevorzugt von 800 bis 4500 Da sowie Funktionalitäten von 2 bis 3 aufweisen. Carbonsäureäquivalente sind hierbei mindestens bifunktionelle organische Carbonsäureester auf Basis niedermolekularer Alkohole, mindestens bifunktionelle organische Carbonsäureanhydride und mindestens bifunktionelle organische innere Ester, sog. Lactone.

Mindestens bifunktionelle organische Carbonsäuren sind beispielsweise Glutarsäure, Bernsteinsäure, Adipinsäure, Terephthalsäure, Phthalsäure und Isophthalsäure. Unter Carbonsäureestern mit niedermolekularen Alkoholen werden insbesondere die Methyl- und Ethylester verstanden. Unter Carbonsäureanhydride werden innere Anhydride der Carbonsäuren verstanden, beispielsweise Bernsteinsäureanhydrid, Glutarsäureanhydrid, Maleinsäureanhydrid und Phthalsäureanhydrid. Ein innerer Ester ist insbesondere ε-Caprolacton. Die vorgenannten Einsatzstoffe können einzeln oder in Form von Gemischen verwendet werden.

Als niedermolekulare Polyalkohole kommen insbesondere Ethylenglykol, Diethylenglykol, 1,2-Propandiol, 1,3-Propandiol, 1,2-Butandiol, 1,3-Butandiol, 1,4-Butandiol, 1,5-Pentandiol, 1,6-Hexandiol, 3-Methyl-1,5-pentandiol, 2-Methylpropandiol-1,3, 1,12-Dodecandiol, Glycerin, Trimethylolpropan, und Pentaerythrit in Betracht.

Selbstverständlich können die o.g. niedermolekularen Polyalkohole und die o.g. Carbonsäuren bzw. Carbonsäureäquivalente auch bio-basiert sein, d.h. mittels enzymatischer und/oder chemischer Prozesse aus nachwachsenden Rohstoffen hergestellt sein. Beispielhaft seien genannt: Bernsteinsäure, Adipinsäure, 1,3-Propandiol, 1,4-Butandiol, Ethylenglykol, Diethylenglykol und Glycerin.

Die Umsetzung der genannten Komponenten kann in Gegenwart eines Katalysators erfolgen. Sie kann aber auch unkatalysiert erfolgen.

Geeignete Polycarbonatpolyole in der Komponente A2) sind Umsetzungsprodukte von mindestens bifunktionellen Alkoholen mit Carbonylquellen, wobei die Polycarbonatpolyole zahlenmittlere Molekulargewichte von 200 bis 6500 Da, bevorzugt von 400 bis 4000 Da, besonders bevorzugt von 500 bis 2000 Da sowie Funktionalitäten von 2 bis 3 aufweisen. Als Carbonylquellen kommen insbesondere Dimethylcarbonat, Diethylcarbonat, Diphenylcarbonat und Phosgen in Betracht. Bevorzugt wird auf Seiten der Alkohole Hexandiol-1,6 verwendet. Es können aber beispielsweise auch Umsetzungsprodukte von 1,6-Hexandiol mit ε-Caprolacton oder Umsetzungsprodukte von 1,6-Hexandiol mit Adipinsäure verwendet werden.

Besonders gute Ergebnisse hinsichtlich einer verminderten Wasseraufnahme werden erzielt, wenn die Komponente A2) so ausgewählt wird, dass sie mindestens 50 Gew.-%, bevorzugt mindestens 70 Gew.-%, besonders bevorzugt mindestens 75 Gew.-% Polyetherpolyole, bezogen auf A2), enthält.

Als Komponente A3) geeignete aliphatische Alkandiole weisen 2 bis 12 C-Atome auf. Besonders bevorzugt sind Verbindungen aus der Gruppe bestehend aus Ethylenglykol, Propandiol-1,3, Butandiol-1,4, Pentandiol-1,5, Hexandiol-1,6, Neopentylglykol, Octandiol-1,8, Nonandiol-1,9, Decandiol-1,10 und Dodecandiol-1,12.

Geeignete kurzkettige aliphatische Polyamine in der Komponente A4) weisen zahlenmittlere Molekulargewichte von 60 bis 1200 Da auf. Beispielhaft seien die sogenannten Jeffamine der Fa. Huntsman sowie Isophorondiamin (IPDA) und Diethyltoluylendiamin (DETDA) genannt.

Geeignete aliphatische Aminoalkohole in der Komponente A4) sind zum Beispiel Ethanolamin, 1,2- und 1,3-Propanolamin und Butanolamin.

Als geeignete Komponenten A5) können die bekannten Katalysatoren für die Urethan- und Harnstoffreaktion eingesetzt werden, wie sie in US 4 218 543 oder DE-OS 39 14 718 beschrieben sind. Beispielhaft seien tertiäre Amine oder die Zinn(II)- oder Zinn(IV)-Salze höherer Carbonsäuren sowie Salze des Wismuts genannt.

Als weitere Hilfs- und/oder Zusatzstoffe A6) kommen Stabilisatoren, wie die bekannten Polyethersiloxane, oder Trennmittel, wie Zinkstearat, zum Einsatz.

Die bekannten Katalysatoren A5) und die Hilfs- und/oder Zusatzstoffe A6) sind beispielsweise in Kapitel 3.4 des Kunststoffhandbuchs Polyurethane, Carl Hanser Verlag (1993), S. 95 bis 119 beschrieben und können in den üblichen Mengen eingesetzt werden.

Geeignete Polyisocyanate und Polyisocyanatgemische der Diphenylmethanreihe B1) sind solche Polyisocyanate, wie sie bei der Phosgenierung von Anilin/Formaldehyd-Kondensaten gebildet werden. Der Begriff "Polyisocyanatgemisch der Diphenylmethanreihe" steht für beliebige Gemische von Polyisocyanaten der Diphenylmethanreihe, insbesondere für solche Gemische, die bei der destillativen Auftrennung von Phosgenierungsprodukten von Anilin/Formaldehyd-Kondensaten als Destillationsrückstand anfallen, sowie deren beliebige Abmischungen mit anderen Polyisocyanaten der Diphenylmethanreihe.

Typische Beispiele für geeignete Polyisocyanate sind 4,4'-Diisocyanatodiphenylmethan, dessen Gemische mit 2,2'- und insbesondere 2,4'-Diisocyanatodiphenylmethan, Gemische dieser Diisocyanatodiphenylmethan-Isomeren mit ihren höheren Homologen, wie sie bei der Phosgenierung von Anilin/Formaldehyd-Kondensaten anfallen.

Weiterhin umfasst "Polyisocyanate und Polyisocyanatgemische der Diphenylmethanreihe" auch solche Isocyanate, die beispielsweise durch partielle Carbodiimidisierung oder Allophanatisierung der Isocyanatgruppen der genannten Di- und/oder Polyisocyanate erhältlich sind, einschließlich Gemische derart modifizierter Di- und/oder Polyisocyanate mit anderen Di- und/oder Polyisocyanaten der Diphenylmethanreihe.

Als aliphatische Polyisocyanate B2) werden cyclo-aliphatische und aliphatische Polyisocyanate, bevorzugt Diisocyanate, eingesetzt. Geeignete Diisocyanate sind beliebige durch Phosgenierung oder nach phosgenfreien Verfahren, beispielsweise durch thermische Urethanspaltung, zugängliche Diisocyanate des Molekulargewichtsbereichs 140 bis 400 mit aliphatisch oder cycloaliphatisch gebundenen Isocyanatgruppen, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethyl-cyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norbornan oder beliebige Gemische solcher Diisocyanate. Zur Herstellung der erfindungsgemäßen Polyurethanummantelungen eignen sich besonders Isophorondiisocyanat (IPDI) und Hexamethylendiisocyanat (HDI). Die Isocyanate können in Form der reinen Verbindung oder in modifizierter Form, beispielsweise in Form von Uretdionen, Isocyanuraten, Allophanaten, Biureten, mit Iminooxadiazindion- und/oder Oxadiazintrionstruktur und/oder Carbodiimidmodifizierten Isocyanaten eingesetzt werden. Die Isocyanate weisen vorzugsweise einen Isocyanatgehalt von 15 bis 35 Gew.-% auf.

Unter den Umsetzungsprodukten von B1) oder B2) mit wenigstens einer Polyolkomponente mit einem zahlenmittleren Molekulargewicht von 140 bis 500 Da werden NCO-Prepolymere verstanden, die NCO-Gehalte von 10 bis 28 Gew.-% NCO aufweisen. Sie können dadurch erhalten werden, dass man die jeweilige Komponente B1) oder B2) in solchen Mengenverhältnissen mit der Polyolkomponente zur Reaktion bringt (NCO-Überschuss), dass NCO-Prepolymere mit dem genannten NCO-Gehalt resultieren. Die diesbezügliche Umsetzung erfolgt im Allgemeinen innerhalb des Temperaturbereichs von 25 bis 100 °C.

Geeignete Polyolkomponenten mit zahlenmittleren Molekulargewicht von 140 bis 500 Da sind die aus der Polyurethanchemie an sich bekannten Alkoxylierungsprodukte von vorzugsweise di- oder trifunktionellen Startermolekülen bzw. Gemischen derartiger Startermoleküle. Geeignete Startermoleküle sind beispielsweise Wasser, Ethylenglykol, Diethylenglykol, Propylenglykol, Trimethylolpropan und Glycerin. Zur Alkoxylierung eingesetzte Alkylenoxide sind insbesondere Propylenoxid und Ethylenoxid, wobei diese Alkylenoxide in beliebiger Reihenfolge und/oder als Gemisch zum Einsatz gelangen können.

Unter der Kennzahl (auch Isocyanat-Kennzahl oder Isocyanat-Index genannt) wird dabei der Quotient aus der tatsächlich eingesetzten Stoffmenge [Mol] an Isocyanat-Gruppen und der für den vollständigen Umsatz aller Isocyanat-Gruppen stöchiometrisch benötigten Stoffmenge [Mol] an Isocyanat-reaktiven Gruppen, multipliziert mit 100, verstanden. Da für die Umsetzung eines Mols einer Isocyanat-reaktiven Gruppe ein Mol einer Isocyanat-Gruppe benötigt wird, gilt:

$$\text{Kennzahl} = (\text{Mole Isocyanat-Gruppen} / \text{Mole Isocyanat-reaktive Gruppen}) \times 100.$$

Die Herstellung der Ummantelung aus Polyurethan kann z.B. im Labormaßstab dadurch erfolgen, dass man die Polyolkomponente A vorzugsweise bei Raumtemperatur mit der zu A stöchiometrischen Menge Isocyanatkomponente B) versetzt und die Mischung beispielsweise mittels eines Speedmixers 30 Sekunden intensiv vermischt. Diese Mischung gießt man dann beispielsweise in eine vorgeheizte und gegebenenfalls mit Trennmittel eingetrennte Form, verschließt diese und entnimmt die Ummantelung nach der entsprechenden Aushärtezeit.

Die Herstellung der Ummantelung aus Polyurethan kann aber auch nach der bekannten Reaktionsspritzgusstechnik (RSG-Verfahren, "RIM-process") erfolgen, wie sie beispielsweise in DE-AS 2 622 951 (US-A 4 218 543) oder DE-OS 39 14 718 beschrieben ist.

Alternativ kann die Herstellung von Ummantelungen auch mittels Sprüh- oder Gießverfahren erfolgen.

Die Polyurethane für die erfindungsgemäßen Ummantelungen haben eine Wasseraufnahme, die um mindestens 10% kleiner ist als die Wasseraufnahme eines entsprechenden Polyurethans aus denselben Komponenten ohne die Komponente A1).

Die Bestimmung des Wertes für die Wasseraufnahme erfolgt im Rahmen der vorliegenden Erfindung dadurch, dass man plane PUR-Platten, beispielsweise mit den Maßen 20 cm x 20 cm x 0,38 cm, bei Raum¬temperatur herstellt und einen Tag nach der Herstellung 5 cm x 5 cm x 0,38 cm große Stücke aus den Platten herausschneidet und eventuelle Verunreinigungen, wie zum Beispiel Trennmittelreste, von den Prüfkörpern entfernt. Anschließend bestimmt man die Masse der trockenen Prüfkörper, taucht sie dann für beispielsweise 7 Tage vollständig in Leitungswasser (z.B. bei 23 °C) und bestimmt nach dieser Zeit erneut die Masse der Prüfkörper. Die Massendifferenz gibt man in Prozent bezogen auf den Ausgangswert an.

Die Erfindung soll anhand der nachfolgenden Beispiele näher erläutert werden.

**Beispielteil:**

A) **Methoden und Geräte**

Hydroxylzahlen (OHZ) wurden gemäß DIN 53240; Dezember 1971 bestimmt.

Säurezahlen wurden gemäß DIN EN ISO 2114 (Juni 2002) bestimmt.

Viskositäten wurden bei der jeweils angegebenen Temperatur nach EN ISO 3219 in der Fassung vom Oktober 1994 bestimmt.

Der Anteil an eingebautem $CO_2$ im resultierenden Polyethercarbonatpolyol ("eingebautes $CO_2$") sowie das Verhältnis von Propylencarbonat zu Polyethercarbonatpolyol wurden mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt: cyclisches Carbonat (welches als Nebenprodukt gebildet wurde) Resonanz bei 4,5 ppm, Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm.

Der Molanteil des im Polymer eingebauten Carbonates, des Polyetherpolyols sowie des nicht abreagierten PO (Propylenoxids) werden durch Integration der entsprechenden Signale ermittelt.

Weitergehende Details sind in WO 2014/033 071 ausführlich beschrieben.

**B) Kommerziell erhältliche Ausgangsmaterialien:**

Isopur® Schwarzpaste N der Fa. ISL-Chemie GmbH+Co. KG.

| | |
|---|---|
| Irganox® 1135: | 3,5-Bis(isobutyl)-4-hydroxy-benzol-1-propionsäure-alkylester, Antioxidans der Fa. BASF. |
| Tinuvin® B75: | Lichtstabilisierendes Additiv der Fa. BASF |
| Fomrez® UL28: | Dimethylbis[(1-oxoneodecyl)oxy]stannan; Katalysator der Fa. Chemtura Vinyl Additives GmbH |
| Dabco 33LV: | 33 Gew.-% Triethylendiamin in Dipropylengylkol, Katalysator der Fa. Air Products |
| Desmorapid® VP.PU 20AK36: | Zinn-Katalysator der Fa. Bayer MaterialScience |
| Desmophen® 4050E: | Tetrafunktionelles Polyetherpolyol auf Aminbasis der Fa. Bayer MaterialScience mit einer Hydroxylzahl von ca. 625 mg KOH/g und einer Viskosität bei 25 °C von ca. 19000 mPa·s |
| Desmophen® L2830: | Bifunktionelles Polyetherpolyol mit überwiegend primären Hydroxylgruppen der Fa. Bayer MaterialScience mit einer Hydroxylzahl von 26 - 30 mg KOH/g und einer Viskosität bei 25 °C von 790 - 930 mPa·s |
| PET 5168T: | Bifunktionelles Polyetherpolyol mit überwiegend primären Hydroxylgruppen der Fa. Bayer MaterialScience mit einer Hydroxylzahl von ca. 28 mg KOH/g und einer Viskosität bei 25 °C von ca. 1000 mPa s |
| Polyether V2725: | Trifunktionelles Polyetherpolyol mit überwiegend primären Hydroxylgruppen der Fa. Bayer MaterialScience mit einer Hydroxylzahl von ca. 28 mg KOH/g und einer Viskosität bei 25 °C von ca. 1500 mPa s |
| Desmophen® 4011T: | Trifunktionelles Polyetherpolyol der Fa. Bayer MaterialScience mit einer Hydroxylzahl von 525 - 575 mg KOH/g und einer Viskosität bei 25°C von 1540 - 2060 mPa·s |
| Polyether L800: | Bifunktionelles Polyetherpolyol der Fa. Bayer MaterialScience mit einer Hydroxylzahl von ca. 515 mg KOH/g und einer Viskosität bei 25°C von ca. 80 mPa s |
| PET 3973Y: | Trifunktionelles Polyetherpolyol mit überwiegend primären Hydroxylgruppen der Fa. Bayer MaterialScience mit einer Hydroxylzahl von ca. 28 mg KOH/g und einer Viskosität bei 25°C von ca. 1100 mPa s |
| Desmophen® C XP | 2716: Lineares, aliphatisches Polycarbonatdiol mit endständigen Hydroxylgruppen der Fa. Bayer MaterialScience mit einem Molekulargewicht von ca. 650 g/mol und einer Viskosität bei 25°C von ca. 4100 mPa s |
| Desmodur® E 305: | Aliphatisches Polyisocyanat mit endständigen NCO-Gruppen der Fa. Bayer MaterialScience mit einem Molekulargewicht von ca. 650 g/mol und einer Viskosität bei 25°C von ca. 4000 mPa s |
| Desmodur® PA 09: | Modifiziertes Diphenylmethan-4,4'-diisocyanat der Fa. Bayer MaterialScience mit einem NCO-Gehalt von 24,0 - 25,0 Gew.-% und einer Viskosität bei 25°C 375 - 575 mPa·s |
| Desmodur® 48IF44: | Aliphatisches Polyisocyanat der Fa. Bayer MaterialScience mit einem NCO-Gehalt ca. 21 % und einer Viskosität bei 20 °C ca. 9015 mPa·s |
| Desmodur® XP2489: | Aliphatisches Polyisocyanat der Fa. Bayer MaterialScience mit einem NCO-Gehalt von ca. 21,0 $\pm$ 0,5 % und einer Viskosität bei 23 °C von ca. 22.500 $\pm$ 2.500 mPa·s |
| Arcol® Polyol 1004: | PET 1004: Bifunktionelles Polyetherpolyol der Fa. Bayer MaterialScience zur Herstellung von Polyurethanen mit einer Hydroxylzahl von ca. 260 mg KOH/g und einer Viskosität bei 25°C von ca. 220 mPa s |
| Butandiol-1,4: | Fa. Acros |
| Ethylenglykol: | Fa. Acros |
| Diethylenglykol: | Sigma Aldrich |
| Propylencarbonat (cPC): | Fa. Acros |
| Indrosil® 2000: | Trennmittel der Fa. Indroma Chemikalien |
| IPDA: | Isophorondiamin der Fa. Evonik |
| DMC-Katalysator: | wurde wie in Beispiel 6 der WO 01/80994 A1 beschrieben hergestellt |

**C) Herstellung von Polyesterpolyolen, PES-C**

Herstellung des Polyesterpolyols 1 (PES C-1) :

In einem 2-Liter-Vierhalskolben ausgestattet mit mechanischem Rührer, 50 cm Vigreux-Kolonne, Thermometer, Stickstoffeinleitung, Kolonnenkopf, Destillationsbrücke und Vakuummembranpumpe) wurden 602 g Adipinsäure (4,122 Mol, entspricht 52,45 Gew.-%) und 546 g (5,147 Mol, entspricht 47,55 Gew.-%) Diethylenglykol unter Stickstoffüberschleierung im Verlauf von 60 min. auf 200 °C erhitzt, wobei Reaktionswasser destillativ entfernt wurde. Nach 3 Stunden wurden 20 mg Zinndichloriddihydrat (entspricht 20 ppm bezogen auf Endprodukt) zugegeben und die Umsetzung fortgeführt. Nach einer Reaktionszeit von insgesamt 5 Stunden wurde der Druck im Verlauf von 1 Stunde langsam auf 15 mbar verringert. Im Verlauf der weiteren Reaktion wurde die Säurezahl verfolgt. Nach einer Reaktionszeit von insgesamt 33 Stunden war die Reaktion beendet. Die Säurezahl betrug 0,42 mg KOH/g.

<div align="center">

Analyse des Polyesters:

</div>

| | |
|---|---|
| Hydroxylzahl: | 112,2 mg KOH/g |
| Säurezahl: | 0,42 mg KOH/g |
| Viskosität: | 170 mPas (75 °C) |

Herstellung des Polyesterpolyols 2 (PES C-2) :

In einem 2-Liter-Vierhalskolben (ausgestattet mit mechanischem Rührer, 50 cm Vigreux-Kolonne, Thermometer, Stickstoffeinleitung, Kolonnenkopf, Destillationsbrücke und Vakuummembranpumpe) wurden 638 g Adipinsäure (4,366 Mol, entspricht 55,14 Gew.-%) und 519 g (4,892 Mol, entspricht 44,86 Gew.-%) Diethylenglykol unter Stickstoffüberschleierung im Verlauf von 60 min. auf 200 °C erhitzt, wobei Reaktionswasser destillativ entfernt wurde. Nach 3 Stunden wurden 20 mg Zinndichloriddihydrat (entspricht 20 ppm bezogen auf Endprodukt) zugegeben und die Umsetzung fortgeführt. Nach einer Reaktionszeit von insgesamt 5 Stunden wurde der Druck im Verlauf von 1 Stunde langsam auf 15 mbar verringert. Im Verlauf der weiteren Reaktion wurde die Säurezahl verfolgt. Nach einer Reaktionszeit von insgesamt 35 Stunden war die Reaktion beendet. Die Säurezahl betrug 0,37 mg KOH/g.

<div align="center">

Analyse des Polyesters :

</div>

| | |
|---|---|
| Hydroxylzahl: | 56,7 mg KOH/g |
| Säurezahl: | 0,37 mg KOH/g |
| Viskosität: | 540 mPas (75 °C) |

Herstellung des Polyesterpolyols 3 (PES C-3) :

In einem 2-Liter-Vierhalskolben (ausgestattet mit mechanischem Rührer, 50 cm Vigreux-Kolonne, Thermometer, Stickstoffeinleitung, Kolonnenkopf, Destillationsbrücke und Vakuummembranpumpe) wurden 657 g Adipinsäure (4,498 Mol, entspricht 56,57 Gew.-%) und 505 g (4,756 Mol, entspricht 43,43 Gew.-%) Diethylenglykol unter Stickstoffüberschleierung im Verlauf von 60 min. auf 200 °C erhitzt, wobei Reaktionswasser destillativ entfernt wurde. Nach 3 Stunden wurden 20 mg Zinndichloriddihydrat (entspricht 20 ppm bezogen auf Endprodukt) zugegeben und die Umsetzung fortgeführt. Nach einer Reaktionszeit von insgesamt 5 Stunden wurde der Druck im Verlauf von 1 Stunde langsam auf 15 mbar verringert. Im Verlauf der weiteren Reaktion wurde die Säurezahl verfolgt. Nach einer Reaktionszeit von insgesamt 40 Stunden war die Reaktion beendet. Die Säurezahl betrug 0,67 mg KOH/g.

<div align="center">

Analyse des Polyesters:

</div>

| | |
|---|---|
| Hydroxylzahl: | 26,6 mg KOH/g |
| Säurezahl: | 0,67 mg KOH/g |
| Viskosität: | 2930 mPas (75 °C) |

Tabelle 1: Übersicht über Polyesterpolyole PES C-1 bis C-3

| Beispiel | | PES C-1 | PES C-2 | PES C-3 |
|---|---|---|---|---|
| Aufbau: | | | | |
| Adipinsäure | [Gew.-%] | 52,45 | 55,14 | 56,57 |
| Diethylenglykol | [Gew.-%] | 47,55 | 44,86 | 43,43 |
| Analyse: | | | | |
| Hydroxylzahl | [mg KOH/g] | 112,2 | 56,7 | 26,6 |
| Säurezahl | [mg KOH/g] | 0,42 | 0,37 | 0,67 |
| Viskosität | [mPas, 75 °C] | 170 | 540 | 2930 |

**D) Herstellung der Polyethercarbonatpolyole, PEC-D**

**Herstellung des Polyethercarbonatpolyols 1 (PEC D-1)**

In einen mit Stickstoff gespülten 60L Druckreaktor mit Gasdosierungseinrichtung (Gaseinleitungsrohr) wurden eine Suspension aus 15,14 g DMC-Katalysator (hergestellt gemäß WO 01/80994 A1, dortiges Beispiel 6) sowie 4700 g cyclisches Propylencarbonat (cPC) vorgelegt. Der Reaktor wurde auf ca. 100 °C aufgeheizt und 1 h bei einem Druck $p_{abs}$ = 100 mbar mit $N_2$ inertisiert. Anschließend wurde der Reaktor mit $CO_2$ auf einen Druck von 74 bar eingestellt. In den Reaktor wurden bei 110 °C unter Rühren (316 U/min) 500 g Propylenoxid (PO) innerhalb von 2 min eindosiert. Das Anspringen der Reaktion machte sich durch eine Temperaturspitze ("Hotspot") und eine Druckabnahme bemerkbar. Nach der erfolgten Aktivierung wurden 34,43 kg Propylenoxid mit 8,2 kg/h und 3,25 kg Monopropylenglykol mit 0,79 kg/h gleichzeitig in den Reaktor eindosiert. Dabei wurde die Reaktionstemperatur auf 105 °C gesenkt und der Druck per Nachdosierung von $CO_2$ konstant gehalten. Nach Beendigung der Zudosierung wurde 30 min nachgerührt. Die Abtrennung des cyclischen Propylencarbonats vom Polyethercarbonatpolyol erfolgte in einem Dünnschichtverdampfer (T = 140 °C, $p_{abs}$ < 3 mbar, 400 U/min).
In der nachfolgenden Tabelle 2 sind die analytischen Daten zum resultierenden Polyethercarbonatpolyol (Gehalt an eingebautem $CO_2$, Hydroxylzahl (OHZ) und Viskosität) angegeben.

**Herstellung des Polyethercarbonatpolyols 2 (PEC D-2)**

In einen mit Stickstoff gespülten 60L Druckreaktor mit Gasdosierungseinrichtung (Gaseinleitungsrohr) wurden eine Suspension aus 9,97 g DMC-Katalysator (hergestellt gemäß WO 01/80994 A1, dortiges Beispiel 6) sowie 4700 g PET 1004 vorgelegt. Der Reaktor wurde auf ca. 100 °C aufgeheizt und 1 h bei einem Druck $p_{abs}$ = 100 mbar mit $N_2$ inertisiert. In den Reaktor wurden bei 125 °C unter Rühren (316 U/min) 963 g Propylenoxid (PO) innerhalb von 2 min eindosiert. Das Anspringen der Reaktion machte sich durch eine Temperaturspitze ("Hotspot") und eine Druckabnahme bemerkbar. Dieser Vorgang wurde anschließend unter 54 bar $CO_2$ wiederholt, wobei 585 g Propoylenoxid dosiert wurden. Nach den erfolgten Aktivierungen wurden 33,62 kg Propylenoxid mit 7,0 kg/h eindosiert. Dabei wurde die Reaktionstemperatur auf 105 °C gesenkt und der Druck per Nachdosierung von $CO_2$ konstant gehalten. Nach Beendigung der Zudosierung wurde 30 min nachgerührt. Die Abtrennung des cyclischen Propylencarbonats vom Polyethercarbonatpolyol erfolgte in einem Dünnschichtverdampfer (T = 140 °C, $p_{abs}$ < 3 mbar, 400 U/min).
In der nachfolgenden Tabelle 2 sind die analytischen Daten zum resultierenden Polyethercarbonatpolyol (Gehalt an eingebautem $CO_2$, Hydroxylzahl (OHZ) und Viskosität) angegeben.

**Herstellung des Polyethercarbonatpolyols 3 (PEC D-3)**

In einen mit Stickstoff gespülten 60L Druckreaktor mit Gasdosierungseinrichtung (Gaseinleitungsrohr) wurden eine Suspension aus 14,25 g DMC-Katalysator (hergestellt gemäß WO 01/80994 A1, dortiges Beispiel 6) sowie 4700 g cyclisches Propylencarbonat (cPC) vorgelegt. Der Reaktor wurde auf ca. 100 °C aufgeheizt und 1 h bei einem Druck $p_{abs}$ = 100 mbar mit $N_2$ inertisiert. Anschließend wurde der Reaktor mit $CO_2$ auf einen Druck von 74 bar eingestellt. In den Reaktor wurden bei 110 °C unter Rühren (316 U/min) 500 g Propylenoxid (PO) innerhalb von 2 min eindosiert. Das Anspringen der Reaktion machte sich durch eine Temperaturspitze ("Hotspot") und eine Druckabnahme bemerkbar. Nach der erfolgten Aktivierung wurden 31,898 kg Propylenoxid mit 7,6 kg/h und 1,5 kg Monopropylenglykol mit 0,4 kg/h gleichzeitig in den Reaktor eindosiert. Dabei wurde die Reaktionstemperatur auf 107 °C gesenkt und der Druck per

Nachdosierung von $CO_2$ konstant gehalten. Nach Beendigung der Zudosierung wurde 30 min nachgerührt. Die Abtrennung des cyclischen Propylencarbonats vom Polyethercarbonatpolyol erfolgte in einem Dünnschichtverdampfer (T = 140 °C, $p_{abs}$ < 3 mbar, 400 U/min).

In der nachfolgenden Tabelle 2 sind die analytischen Daten zum resultierenden Polyethercarbonatpolyol (Gehalt an eingebautem $CO_2$, Hydroxylzahl (OHZ) und Viskosität) angegeben.

Tabelle 2: Übersicht über Polyethercarbonatpolyole, PEC D-1 bis PEC D-3

| Beispiel | $CO_2$-Anteil [Gew.-%] | Hydroxylzahl [mg KOH/g] |
|---|---|---|
| PEC D-1 | 15,2 | 118,4 |
| PEC D-2 | 19,6 | 27,7 |
| PEC D-3 | 18,22 | 55,5 |

## E.) Herstellung von Platten mit Hilfe eines Speedmixers:

Die Polyolkomponente wurde bei Raumtemperatur (23 - 27 °C) in einem verschließbaren 500 ml PE-Becher vorgelegt und mit der angegebenen Menge Isocyanatkomponente versetzt, wobei die Isocyanatkomponente bei den in Tabelle 1 aufgeführten Beispielen, sowie beim Beispiel 5-V auf Raumtemperatur temperiert war und bei den übrigen Beispielen auf 50°C vorgewärmt wurde. Nach dem Verschließen des Behälters wurde dieser in die dafür vorgesehene Halterung des Speedmixers eingesetzt, und die beiden Komponenten 30 Sekunden intensiv vermischt. Die Mischung wurde in eine auf 80°C vorgeheizte und mit Indrosil 2000 eingetrennte 20 x 20 x 0,38 cm große Aluminiumform mit Deckel überführt.

Die Platten der in Tabelle 3 aufgeführten Beispiele, sowie beim Beispiel 5-V wurden nach 1 Minute, die übrigen nach 2 Minuten entformt. Die Dichte der Formteile lag bei allen Platten bei 1,1 +/- 0,1 g/cm$^3$.

## F.) Präparieren der Lagerproben:

Ein Tag nach der Herstellung wurden 5 x 5 cm große Stücke aus den Platten herausgeschnitten. Mit Ethanol und einem Zellstofftuch wurden eventuelle Trennmittelreste von den Prüflingen entfernt. Die trockenen Muster wurden genau gewogen, anschließend in Leitungswasser vollständig untergetaucht und danach entsprechend den angegebenen Lagerzyklen aus dem Wasser entnommen und abermals gewogen. Die Gewichtsdifferenz wurde jeweils in Prozent angegeben.

Die Analysen wurden wie folgt durchgeführt:

Die Wasseraufnahme wurde gravimetrisch bestimmt. Hierzu wurden die Platten bei Raumtemperatur gewogen, danach für 7 Tage in Wasser gelagert und anschließend nach dem Abtupfen von anhängendem Wasser erneut gewogen. Die Werte für die Wasseraufnahme wurden prozentual bezogen auf den Ausgangswert angegeben.

Tabelle 3: Rezepturen und Eigenschaften erfindungsgemäßer und nicht erfindungsgemäßer Polyurethane im Vergleich zu einem aromatischen Standardsystem, Vergleichsbeispiel 1-V.

| Beispiel: | | 1-V* | 2 | 3-V* | 4-V* |
|---|---|---|---|---|---|
| | | | | | |
| Desmophen® L2830 | [Gew.Tle.] | 6,00 | | | |
| PET 5168T | [Gew.Tle.] | 12,00 | | | |
| Polyether V2725 | [Gew.Tle.] | 55,70 | 55,70 | 55,70 | 55,70 |
| PES C-2 | [Gew.Tle.] | | | | 18,00 |
| PES C-3 | [Gew.Tle.] | | | 18,00 | |
| PEC D-3 | [Gew.Tle.] | | 18,00 | | |
| | | | | | |
| Ethylenglykol | [Gew.Tle.] | 15,00 | 15,00 | 15,00 | 15,00 |
| Desmophen® 4050E | [Gew.Tle.] | 3,00 | 3,00 | 3,00 | 3,00 |
| | | | | | |

(fortgesetzt)

| Beispiel: | | 1-V* | 2 | 3-V* | 4-V* |
|---|---|---|---|---|---|
| Isopur® Schwarzpaste N | [Gew.Tle.] | 6,20 | 6,20 | 6,20 | 6,20 |
| Tinuvin® B75 | [Gew.Tle.] | 1,50 | 1,50 | 1,50 | 1,50 |
| Fomrez® UL28 | [Gew.Tle.] | 0,30 | 0,30 | 0,30 | 0,30 |
| Dabco 33LV | [Gew.Tle.] | 0,30 | 0,30 | 0,30 | 0,30 |
| | | | | | |
| **Summe Polyolseite** | [Gew.Tle.] | 100,0 | 100,0 | 100,0 | 100,0 |
| **Polyisocyanatseite:** | | | | | |
| Desmodur® PA09 | [Gew.Tle.] | 96,13 | 97,67 | 96,05 | 97,70 |
| **Kennzahl** | | 100,0 | 100,0 | 100,0 | 100,0 |
| | | | | | |
| Wasseraufnahme nach 7 Tagen [Gew.-%] | | 1,63 | 1,28 | 1,53 | 1,7 |
| *V = Vergleich | | | | | |

Bei Vergleichsbeispiel 1-V handelt es sich um ein aromatisches System. Die Wasseraufnahme beträgt hier 1,63 Gew.-%. Beim erfindungsgemäßen Beispiel 2 wurden die bifunktionellen, langkettigen Polyetherpolyole Desmophen® L 2830 und PET 5168T gegen das Polyethercarbonatpolyol PEC D-3 ausgetauscht. Durch diese Rezepturänderung verringerte sich der Wasseraufnahmewert signifikant.

Ein analoger Austausch der bifunktionellen, langkettigen Polyetherpolyole Desmophen® L 2830 und PET 5168T gegen die Polyesterpolyole PES C-2 und PES C-3 ergibt dagegen nur eine geringe (Vergleichsbeispiel 3-V) Verbesserung, bzw. bei Vergleichsbeispiel 4-V sogar eine leichte Verschlechterung der Wasseraufnahmewerte.

Tabelle 4: Rezepturen und Eigenschaften erfindungsgemäßer und nicht erfindungsgemäßer Polyurethane im Vergleich zu einem aliphatischen Standardsystem, Vergleichsbeispiel 5-V.

| Beispiel: | | 5-V* | 6 | 7 | 8-V* | 9-V* |
|---|---|---|---|---|---|---|
| | | | | | | |
| PET 5168T | [Gew.Tle.] | 65,00 | | | | |
| PES C-2 | [Gew.Tle.] | | | | | 65,00 |
| PES C-3 | [Gew.Tle.] | | | | 65,00 | |
| PEC D-2 | [Gew.Tle.] | | 65,00 | | | |
| PEC D-3 | [Gew.Tle.] | | | 65,00 | | |
| | | | | | | |
| Butandiol-1,4 | [Gew.Tle.] | 5,00 | 5,00 | 5,00 | 5,00 | 5,00 |
| Polyether L800 | [Gew.Tle.] | 10,00 | 10,00 | 10,00 | 10,00 | 10,00 |
| Desmophen® 4011T | [Gew.Tle.] | 15,00 | 15,00 | 15,00 | 15,00 | 15,00 |
| | | | | | | |
| Isopur® Schwarzpaste N | [Gew.Tle.] | 5,00 | 5,00 | 5,00 | 5,00 | 5,00 |
| Tinuvin® B75 | [Gew.Tle.] | 0,75 | 0,75 | 0,75 | 0,75 | 0,75 |
| Fomrez® UL28 | [Gew.Tle.] | 1,00 | 1,00 | 1,00 | 1,00 | 1,00 |
| | | | | | | |
| **Summe Polyolseite** | [Gew.Tle.] | 101,75 | 101,75 | 101,75 | 101,75 | 101,75 |

(fortgesetzt)

| Polyisocyanatseite: | | | | | | |
|---|---|---|---|---|---|---|
| Desmodur® 48IF44 | [Gew.Tle.] | 79,64 | 79,64 | 86,35 | 79,31 | 86,52 |
| **Kennzahl** | | 100,0 | 100,0 | 100,0 | 100,0 | 100,0 |
| | | | | | | |
| Wasseraufnahme nach 7 Tagen [Gew.-%] | | 2,61 | 1,8 | 0,9 | 2,35 | 2,17 |
| *V = Vergleich | | | | | | |

Beim Vergleichsbeipiel 5-V handelt es sich um ein aliphatisches System mit einem Wasseraufnahmewert von 2,61 Gew.-%.

Bei den erfindungsgemäßen Beipielen 6 und 7 wurden das bifunktionelle, langkettige Polyetherpolyol PET 5168T gegen die Polyethercarbonatpolyole PEC D-2 bzw. PEC D-3 ausgetauscht. Infolgedessen verringerte sich der Wasseraufnahmewert signifikant von 2,61 Gew.-% (Vergleichsbeispiel 5-V - Standard) auf 1,8 Gew.-% (erfindungsgemäßes Beispiel 6), bzw. 0,9 Gew.-% (erfindungsgemäßes Beispiel 7).

Ein analoger Austausch gegen die Polyesterpolyole PES C-2 und PES C-3 ergibt dagegen nur eine geringe Verbesserung der Wasseraufnahme (Vergleichsbeispiele 8-V und 9-V).

Tabelle 5: Rezepturen und Eigenschaften erfindungsgemäßer und nicht erfindungsgemäßer Polyurethane im Vergleich zu einem aliphatischen, Polycarbonatdiol enthaltenden Standardsystem, Vergleichsbeispiel 10-V.

| Beispiel: | | 10-V* | 11 | 12-V* |
|---|---|---|---|---|
| | | | | |
| PET 3973Y | [Gew.Tle.] | 59,52 | 59,52 | 59,52 |
| PESC-1 | [Gew.Tle.] | | | 17,67 |
| PECD-1 | [Gew.Tle.] | | 17,67 | |
| | | | | |
| Butandiol-1,4 | [Gew.Tle.] | 8,84 | 8,84 | 8,84 |
| Desmophen® C XP 2716 | [Gew.Tle.] | 17,67 | | |
| Desmophen® 4011 T | [Gew.Tle.] | 8,84 | 8,84 | 8,84 |
| IPDA | [Gew.Tle.] | 2,94 | 2,94 | 2,94 |
| | | | | |
| Isopur® Schwarzpaste N | [Gew.Tle.] | 5,00 | 5,00 | 5,00 |
| Tinuvin® B75 | [Gew.Tle.] | 0,75 | 0,75 | 0,75 |
| Irganox® 1135 | [Gew.Tle.] | 1,00 | 1,00 | 1,00 |
| Fomrez® UL28 | [Gew.Tle.] | 0,44 | 0,44 | 0,44 |
| Dabco 33LV | [Gew.Tle.] | | | |
| | | | | |
| **Summe Polyolseite** | [Gew.Tle.] | 105,0 | 105,0 | 105,0 |
| **Polyisocyanatseite:** | | | | |
| Desmodur® XP2489 | [Gew.Tle.] | 52,74 | 50,24 | 50,25 |
| Desmodur® E 305 | [Gew.Tle.] | 52,74 | 50,24 | 50,25 |
| **Kennzahl** | | 105,0 | 105,0 | 105,0 |
| | | | | |

(fortgesetzt)

| Polyisocyanatseite: | | | | |
|---|---|---|---|---|
| Wasseraufnahme nach 7 Tagen [Gew.-%] | | 3,87 | 3,39 | 3,77 |
| *V = Vergleich | | | | |

Beim nicht erfindungsgemäßen Beispiel 10-V handelt es sich um ein aliphatisches, Polycarbonatdiol enthaltendes (Desmophen® C XP 2716) System.

Beim erfindungsgemäßen Beispiel 11 wurde das bifunktionelle aliphatische Polycarbonatdiol Desmophen® C XP 2716 gegen das Polyethercarbonatpolyol PEC D-1 ausgetauscht. Infolgedessen verringerte sich der Wasseraufnahmewert signifikant von 3,87 Gew.-% auf 3,39 Gew.-%.

Beim nicht erfindungsgemäßen Beispiel 12-V wurde das bifunktionelle aliphatische Polycarbonatdiol Desmophen® C XP 2716 gegen das Polyesterpolyol PES C-1 ausgetauscht. Der Wasseraufnahmewert verringerte sich nur leicht von 3,87 Gew.-% auf 3,77 Gew.-%.

Die Ergebnisse der Tabellen 3 bis 5 zeigen in eindeutiger Weise, dass optimale Ergebnisse bezüglich möglichst geringer Wasseraufnahmewerte erreicht werden, wenn PEC-Polyole an Stelle von Polyetherpolyolen, Polyesterpolyolen oder Polycarbonatpolyolen verwendet werden.

Tendenziell bewirkt ein hoher PEC-Anteil (erfindungsgemäße Beispiele 6 und 7) eine deutlichere Reduktion in der Wasseraufnahme als ein niedriger Anteil (erfindungsgemäßes Beispiel 2).

## Patentansprüche

1.  Ummantelungen aus Polyurethan, wobei das Polyurethan erhältlich ist aus:

    A) einer Polyolkomponente bestehend aus

    A1) 5 bis 90 Gew.-% mindestens eines Polyethercarbonatpolyols (PEC) mit einem Anteil an eingebautem $CO_2$ von 14 bis 25 Gew.-%, bezogen auf die Gesamtmasse an PEC und mit einem zahlenmittleren Molekulargewicht (M) von 600 bis 6000 Da (gemessen gemäß DIN 53240; Dezember 1971 und berechnet nach der Formel: M= 56100 • Funktionalität/OH-Zahl) und einer zahlenmittleren Funktionalität von 2 bis 3 und

    A2) 10 bis 95 Gew.-% mindestens eines weiteren Polyols mit einem zahlenmittleren Molekulargewicht von 200 bis 6500 Da (gemessen gemäß DIN 53240; Dezember 1971 und berechnet nach der Formel: M= 56100 • Funktionalität/OH-Zahl) aus der Gruppe bestehend aus Polyetherpolyolen mit einer zahlenmittleren Funktionalität von 2 bis 8, Polyesterpolyolen mit einer zahlenmittleren Funktionalität von 2 bis 3 und Polycarbonatpolyolen mit einer zahlenmittleren Funktionalität von 2 bis 3 und

    A3) 2 bis 20 Gew.-% aliphatischen Alkandiolen mit zahlenmittleren Molekulargewichten von 62 bis 500 Da (gemessen gemäß DIN 53240; Dezember 1971 und berechnet nach der Formel: M= 56100 • Funktionalität/OH-Zahl) und

    A4) 0 bis 10 Gew.-% kurzkettigen aliphatischen Polyaminen und/oder aliphatischen Aminoalkoholen mit zahlenmittleren Molekulargewichten von 60 bis 1200 Da (gemessen gemäß DIN 53240; Dezember 1971 und berechnet nach der Formel: M= 56100 • Funktionalität/OH- bzw. NH-Zahl) und einer Funktionalität von 2,

    A5) Katalysatoren und

    A6) gegebenenfalls Hilfs- und/oder Zusatzmitteln

    wobei die Summe aus A1), A2), A3), A4), A5) und A6) 100 Gew.-% beträgt, und

    B) einer Isocyanatkomponente bestehend aus

    B1) mindestens einem Isocyanat aus der Gruppe bestehend aus Polyisocyanaten der Diphenylmethanreihe, Polyisocyanatgemischen der Diphenylmethanreihe und deren Umsetzungsprodukten mit mindestens einer Polyolkomponente mit einem zahlenmittleren Molekulargewicht von 140 bis 500 Da (gemessen gemäß DIN 53240; Dezember 1971 und berechnet nach der Formel: M= 56100 • Funktionalität/OH-Zahl) und einer zahlenmittleren Funktionalität von 2 bis 3, die NCO-Gehalte von 10 bis 28 Gew.-% NCO aufweisen, oder

    B2) mindestens einem Isocyanat aus der Gruppe bestehend aus aliphatischen Polyisocyanaten und deren Umsetzungsprodukten mit mindestens einer Polyolkomponente mit einem zahlenmittleren Molekulargewicht von 140 bis 500 Da (gemessen gemäß DIN 53240; Dezember 1971 und berechnet nach der Formel: M= 56100 • Funktionalität/OH-Zahl) und einer zahlenmittleren Funktionalität von 2 bis 3, die NCO-Gehalte von 10 bis 28 Gew.-% NCO aufweisen,

wobei die Kennzahl 90 bis 115 beträgt.

**2.** Ummantelungen aus Polyurethan gemäß Anspruch 1, wobei das Polyurethan erhältlich ist aus:

A) einer Polyolkomponente bestehend aus

A1) 13 bis 75 Gew.-% mindestens eines Polyethercarbonatpolyols (PEC) mit einem Anteil an eingebautem $CO_2$ von 14 bis 25 Gew.-%, bezogen auf die Gesamtmasse an PEC und mit einem zahlenmittleren Molekulargewicht von 800 bis 4500 Da (gemessen gemäß DIN 53240; Dezember 1971 und berechnet nach der Formel: M= 56100 • Funktionalität/OH-Zahl) und einer zahlenmittleren Funktionalität von 2 bis 3 und einem Anteil an eingebautem $CO_2$ im Bereich von 14 bis 25 Gew.-%, bezogen auf die Gesamtmasse der PEC, und basierend auf Alkylenoxiden aus der Gruppe bestehend aus 70 bis 100 Gew.-% Propylenoxid und 0 bis 30 Gew.-% Ethylenoxid, und

A2) 23 bis 85 Gew.-% mindestens eines weiteren Polyols mit einem zahlenmittleren Molekulargewicht von 200 bis 6500 Da (gemessen gemäß DIN 53240; Dezember 1971 und berechnet nach der Formel: M= 56100 • Funktionalität/OH-Zahl) aus der Gruppe bestehend aus 70 bis 100 Gew.-% Polyetherpolyolen mit einer zahlenmittleren Funktionalität von 2 bis 8, 0 bis 30 Gew.-% Polyesterpolyolen mit einer zahlenmittleren Funktionalität von 2 bis 3 und 0 bis 30 Gew.-% Polycarbonatpolyolen mit einer zahlenmittleren Funktionalität von 2 und

A3) 2 bis 20 Gew.-% aliphatischen Alkandiolen mit zahlenmittleren Molekulargewichten von 62 bis 500 Da (gemessen gemäß DIN 53240; Dezember 1971 und berechnet nach der Formel: M= 56100 • Funktionalität/OH-Zahl) und

A4) 0 bis 10 Gew.-% kurzkettigen aliphatischen Polyaminen und/oder aliphatischen Aminoalkoholen mit zahlenmittleren Molekulargewichten von 60 bis 1200 Da (gemessen gemäß DIN 53240; Dezember 1971 und berechnet nach der Formel: M= 56100 • Funktionalität/OH- bzw. NH-Zahl) und einer Funktionalität von 2,

A5) Katalysatoren und

A6) gegebenenfalls Hilfs- und/oder Zusatzmitteln

wobei die Summe aus A1), A2), A3), A4), A5) und A6) 100 Gew.-% beträgt, und

B) einer Isocyanatkomponente bestehend aus

B1) mindestens einem Isocyanat aus der Gruppe bestehend aus Polyisocyanaten der Diphenylmethanreihe, Polyisocyanatgemischen der Diphenylmethanreihe und deren Umsetzungsprodukten mit mindestens einer Polyolkomponente mit einem zahlenmittleren Molekulargewicht von 140 bis 500 Da (gemessen gemäß DIN 53240; Dezember 1971 und berechnet nach der Formel: M= 56100 • Funktionalität/OH-Zahl) und einer zahlenmittleren Funktionalität von 2 bis 3, die NCO-Gehalte von 10 bis 28 Gew.-% NCO aufweisen, oder

B2) mindestens einem Isocyanat aus der Gruppe bestehend aus aliphatischen Polyisocyanaten und deren Umsetzungsprodukten mit mindestens einer Polyolkomponente mit einem zahlenmittleren Molekulargewicht von 140 bis 500 Da (gemessen gemäß DIN 53240; Dezember 1971 und berechnet nach der Formel: M= 56100 • Funktionalität/OH-Zahl) und einer zahlenmittleren Funktionalität von 2 bis 3, die NCO-Gehalte von 10 bis 28 Gew.-% NCO aufweisen,

wobei die Kennzahl 90 bis 115 beträgt.

**3.** Verwendung der Ummantelungen gemäß Anspruch 1 oder 2 zur Ummantelung von Scheiben, Platten, Fliesen, von Laminaten, Holzplatten, Metallplatten und Kabeln.

**Claims**

**1.** Outer shells composed of polyurethane, wherein the polyurethane is obtainable from:

A) a polyol component consisting of

A1) 5% to 90% by weight of at least one polyether carbonate polyol (PEC) incorporating a proportion of $CO_2$ of 14% to 25% by weight, based on the total mass of PEC, and having a number-average molecular weight (M) of 600 to 6000 Da (measured according to DIN 53240; December 1971 and calculated by the formula: M = 56 100 • functionality/OH number) and a number-average functionality of 2 to 3 and

A2) 10% to 95% by weight of at least one further polyol having a number-average molecular weight of 200 to 6500 Da (measured according to DIN 53240; December 1971 and calculated by the formula: M = 56 100 • functionality/OH number) from the group consisting of polyether polyols having a number-average functionality of 2 to 8, polyester polyols having a number-average functionality of 2 to 3 and polycarbonate polyols having a number-average functionality of 2 to 3 and

A3) 2% to 20% by weight of aliphatic alkanediols having number-average molecular weights of 62 to 500 Da (measured according to DIN 53240; December 1971 and calculated by the formula: M = 56 100 • functionality/OH number) and

A4) 0% to 10% by weight of short-chain aliphatic polyamines and/or aliphatic amino alcohols having number-average molecular weights of 60 to 1200 Da (measured according to DIN 53240; December 1971 and calculated by the formula: M = 56 100 • functionality/OH or NH number) and a functionality of 2,

A5) catalysts and

A6) optionally auxiliaries and/or additives

where the sum total of A1), A2), A3), A4), A5) and A6) is 100% by weight,
and
B) an isocyanate component consisting of

B1) at least one isocyanate from the group consisting of polyisocyanates from the diphenylmethane series, polyisocyanate mixtures from the diphenylmethane series and reaction products thereof with at least one polyol component having a number-average molecular weight of 140 to 500 Da (measured according to DIN 53240; December 1971 and calculated by the formula: M = 56 100 • functionality/OH number) and a number-average functionality of 2 to 3, having NCO contents of 10% to 28% by weight NCO, or

B2) at least one isocyanate from the group consisting of aliphatic polyisocyanates and reaction products thereof with at least one polyol component having a number-average molecular weight of 140 to 500 Da (measured according to DIN 53240; December 1971 and calculated by the formula: M = 56 100 • functionality/OH number) and a number-average functionality of 2 to 3, having NCO contents of 10% to 28% by weight NCO,

where the index is 90 to 115.

2. Outer shells composed of polyurethane according to Claim 1, wherein the polyurethane is obtainable from:

A) a polyol component consisting of

A1) 13% to 75% by weight of at least one polyether carbonate polyol (PEC) incorporating a proportion of $CO_2$ of 14% to 25% by weight, based on the total mass of PEC, and having a number-average molecular weight of 800 to 4500 Da (measured according to DIN 53240; December 1971 and calculated by the formula: M = 56 100 • functionality/OH number) and a number-average functionality of 2 to 3 and a proportion of incorporated $CO_2$ in the range from 14% to 25% by weight, based on the total mass of the PEC, and based on alkylene oxides from the group consisting of 70% to 100% by weight of propylene oxide and 0% to 30% by weight of ethylene oxide, and

A2) 23% to 85% by weight of at least one further polyol having a number-average molecular weight of 200 to 6500 Da (measured according to DIN 53240; December 1971 and calculated by the formula: M = 56 100 • functionality/OH number) from the group consisting of 70% to 100% by weight of polyether polyols having a number-average functionality of 2 to 8, 0% to 30% by weight of polyester polyols having a number-average functionality of 2 to 3 and 0% to 30% by weight of polycarbonate polyols having a number-average functionality of 2 and

A3) 2% to 20% by weight of alkanediols having number-average molecular weights of 62 to 500 Da (measured according to DIN 53240; December 1971 and calculated by the formula: M = 56 100 • functionality/OH number) and

A4) 0% to 10% by weight of short-chain aliphatic polyamines and/or aliphatic amino alcohols having number-average molecular weights of 60 to 1200 Da (measured according to DIN 53240; December 1971 and calculated by the formula: M = 56 100 • functionality/OH or NH number) and a functionality of 2,
A5) catalysts and
A6) optionally auxiliaries and/or additives where the sum total of A1), A2), A3), A4), A5) and A6) is 100% by weight,
and

B) an isocyanate component consisting of

B1) at least one isocyanate from the group consisting of polyisocyanates from the diphenylmethane series, polyisocyanate mixtures from the diphenylmethane series and reaction products thereof with at least one polyol component having a number-average molecular weight of 140 to 500 Da (measured according to DIN 53240; December 1971 and calculated by the formula: M = 56 100 • functionality/OH or NH number) and a number-average functionality of 2 to 3, having NCO contents of 10% to 28% by weight NCO, or
B2) at least one isocyanate from the group consisting of aliphatic polyisocyanates and reaction products thereof with at least one polyol component having a number-average molecular weight of 140 to 500 Da (measured according to DIN 53240; December 1971 and calculated by the formula: M = 56 100 • functionality/OH number) and a number-average functionality of 2 to 3, having NCO contents of 10% to 28% by weight NCO,

where the index is 90 to 115.

3. Use of the outer shells according to Claim 1 or 2 for encasing sheets, slabs, tiles, laminates, wooden boards, metal plates and cables.


**Revendications**

1. Enrobages en polyuréthane, le polyuréthane pouvant être obtenu à partir de :

A) un composant polyol constitué par :

A1) 5 à 90 % en poids d'au moins un polyéther-carbonate-polyol (PEC) contenant une proportion de $CO_2$ incorporé de 14 à 25 % en poids, par rapport à la masse totale de PEC, et ayant un poids moléculaire moyen en nombre (M) de 600 à 6 000 Da (mesuré selon DIN 53240 ; décembre 1971 et calculé par la formule : M = 56100 • fonctionnalité/indice OH), et une fonctionnalité moyenne en nombre de 2 à 3, et
A2) 10 à 95 % en poids d'au moins un polyol supplémentaire ayant un poids moléculaire moyen en nombre de 200 à 6 500 Da (mesuré selon DIN 53240 ; décembre 1971 et calculé par la formule : M = 56100 • fonctionnalité/indice OH) du groupe constitué par les polyéther-polyols ayant une fonctionnalité moyenne en nombre de 2 à 8, les polyester-polyols ayant une fonctionnalité moyenne en nombre de 2 à 3, et les polycarbonate-polyols ayant une fonctionnalité moyenne en nombre de 2 à 3, et
A3) 2 à 20 % en poids d'alcane-diols aliphatiques ayant des poids moléculaires moyens en nombre de 62 à 500 Da (mesurés selon DIN 53240 ; décembre 1971 et calculés par la formule : M = 56100 fonctionnalité/indice OH), et
A4) 0 à 10 % en poids de polyamines aliphatiques à chaîne courte et/ou d'aminoalcools aliphatiques ayant des poids moléculaires moyens en nombre de 60 à 1 200 Da (mesurés selon DIN 53240 ; décembre 1971 et calculés par la formule : M = 56100 fonctionnalité/indice OH ou NH) et une fonctionnalité de 2,
A5) des catalyseurs, et
A6) éventuellement des adjuvants et/ou des additifs,

la somme de A1), A2), A3), A4), A5) et A6) étant de 100 % en poids,
et
B) un composant isocyanate constitué par :

B1) au moins un isocyanate du groupe constitué par les polyisocyanates de la série du diphénylméthane, les mélanges de polyisocyanates de la série du diphénylméthane et leurs produits de réaction avec au moins un composant polyol ayant un poids moléculaire moyen en nombre de 140 à 500 Da (mesuré selon DIN 53240 ; décembre 1971 et calculé par la formule : M = 56100 • fonctionnalité/indice OH) et une fonctionnalité moyenne en nombre de 2 à 3, qui présentent des teneurs en NCO de 10 à 28 % en poids de NCO, ou
B2) au moins un isocyanate du groupe constitué par les polyisocyanates aliphatiques et leurs produits de réaction avec au moins un composant polyol ayant un poids moléculaire moyen en nombre de 140 à 500 Da (mesuré selon DIN 53240 ; décembre 1971 et calculé par la formule : M = 56100 • fonctionnalité/indice OH) et une fonctionnalité moyenne en nombre de 2 à 3, qui présentent des teneurs en NCO de 10 à 28 % en poids de NCO,

l'indice caractéristique étant de 90 à 115.

2. Enrobages en polyuréthane selon la revendication 1, dans lesquels le polyuréthane peut être obtenu à partir de :

A) un composant polyol constitué par :

A1) 13 à 75 % en poids d'au moins un polyéther-carbonate-polyol (PEC) contenant une proportion de $CO_2$ incorporé de 14 à 25 % en poids, par rapport à la masse totale de PEC, et ayant un poids moléculaire moyen en nombre de 800 à 4 500 Da (mesuré selon DIN 53240 ; décembre 1971 et calculé par la formule : M = 56100 fonctionnalité/indice OH), et une fonctionnalité moyenne en nombre de 2 à 3, et une proportion de $CO_2$ incorporé dans la plage allant de 14 à 25 % en poids, par rapport à la masse totale de PEC, et à base d'oxydes d'alkylène du groupe constitué par 70 à 100 % en poids d'oxyde de propylène et 0 à 30 % en poids d'oxyde d'éthylène, et
A2) 23 à 85 % en poids d'au moins un polyol supplémentaire ayant un poids moléculaire moyen en nombre de 200 à 6 500 Da (mesuré selon DIN 53240 ; décembre 1971 et calculé par la formule : M = 56100 • fonctionnalité/indice OH) du groupe constitué par 70 à 100 % en poids de polyéther-polyols ayant une fonctionnalité moyenne en nombre de 2 à 8, 0 à 30 % en poids de polyester-polyols ayant une fonctionnalité moyenne en nombre de 2 à 3, et 0 à 30 % en poids de polycarbonate-polyols ayant une fonctionnalité moyenne en nombre de 2, et
A3) 2 à 20 % en poids d'alcane-diols aliphatiques ayant des poids moléculaires moyens en nombre de 62 à 500 Da (mesurés selon DIN 53240 ; décembre 1971 et calculés par la formule : M = 56100 fonctionnalité/indice OH), et
A4) 0 à 10 % en poids de polyamines aliphatiques à chaîne courte et/ou d'aminoalcools aliphatiques ayant des poids moléculaires moyens en nombre de 60 à 1 200 Da (mesurés selon DIN 53240 ; décembre 1971 et calculés par la formule : M = 56100 fonctionnalité/indice OH ou NH) et une fonctionnalité de 2,
A5) des catalyseurs, et
A6) éventuellement des adjuvants et/ou des additifs,

la somme de A1), A2), A3), A4), A5) et A6) étant de 100 % en poids,
et
B) un composant isocyanate constitué par :

B1) au moins un isocyanate du groupe constitué par les polyisocyanates de la série du diphénylméthane, les mélanges de polyisocyanates de la série du diphénylméthane et leurs produits de réaction avec au moins un composant polyol ayant un poids moléculaire moyen en nombre de 140 à 500 Da (mesuré selon DIN 53240 ; décembre 1971 et calculé par la formule : M = 56100 • fonctionnalité/indice OH) et une fonctionnalité moyenne en nombre de 2 à 3, qui présentent des teneurs en NCO de 10 à 28 % en poids de NCO, ou
B2) au moins un isocyanate du groupe constitué par les polyisocyanates aliphatiques et leurs produits de réaction avec au moins un composant polyol ayant un poids moléculaire moyen en nombre de 140 à 500 Da (mesuré selon DIN 53240 ; décembre 1971 et calculé par la formule : M = 56100 • fonctionnalité/indice OH) et une fonctionnalité moyenne en nombre de 2 à 3, qui présentent des teneurs en NCO de 10 à 28 % en poids de NCO,

l'indice caractéristique étant de 90 à 115.

3. Utilisation des enrobages selon la revendication 1 ou 2 pour l'enrobage de plaques, de panneaux, de carreaux, de stratifiés, de panneaux de bois, de panneaux métalliques et de câbles.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008092767 A1
- EP 2703426 A1
- US 4218543 A
- DE OS3914718 A
- DE AS2622951 B
- WO 2014033071 A
- WO 0180994 A1

**In der Beschreibung aufgeführte Nicht-Patentliteratur**

- **SCOTT ALLEN et al.** *Novel CO2-based Polycarbonate Polyols for cast Urethanes,* 07. Mai 2013
- Kunststoffhandbuchs Polyurethane. Carl Hanser Verlag, 1993, 95-119